Europäisches Patentamt

European Patent Office

Office européen des brevets

(11) Publication number: **0 453 068 A2**

# EUROPEAN PATENT APPLICATION

(21) Application number: **91301051.8**

(22) Date of filing: **11.02.91**

(51) Int. Cl.⁵: **F16J  15/12, F16L 27/073, F01N 7/18**

(30) Priority: **14.03.90 US 493278**

(43) Date of publication of application:
**23.10.91 Bulletin  91/43**

(84) Designated Contracting States:
**DE FR GB IT**

(71) Applicant: **METEX CORPORATION**
**907 New Durham Road**
**Edison, New Jersey 08818(US)**

(72) Inventor: **Usher, Peter P.**
**935 Arnet Avenue**
**Union, New Jersey, 07083(US)**

(74) Representative: **Frost, Dennis Thomas et al**
**WITHERS & ROGERS 4 Dyer's Buildings**
**Holborn**
**London, EC1N 2JT(GB)**

(54) Sintered exhaust seal.

(57)  A sintered seal having metallic fibers, at least one lubricant, and a powdered alloy having a relatively lower melting point than the metallic fibers. The seal is sintered in a reducing atmosphere to convert chromium, boron, and carbon compounds in the alloy to borides and carbides which form a coating over the metallic fibers and evenly distributed sites of wear resistant carbides and borides.

EP 0 453 068 A2

## Field of the Invention

The invention relates to sealing rings that are particularly useful for sealing pipe connections that are articulated and which operate at high temperatures.

## Description of Related Technology

Articulated exhaust systems are useful for maintaining a seal between the exhaust manifold and the exhaust header in automobiles. See, U.S. Patent No. 4,188,784. Since the engine is attached by resilient mounts and the manifold must carry hot exhaust gases, the articulated connection is expected to maintain a good seal even under high temperatures and high friction conditions. Seal designs for articulated exhaust systems are described in U.S. Patent No. 4,462,603 which is herein incorporated by reference. As shown in the '603 patent, the seal is annular and exhibits an inside diameter and an outer spherical sealing surface. The manifold pipe contacts the seal on the outer spherical sealing surface and generates considerable friction along the line contact surface.

Graphite is a common component in articulated joint seals due to its good lubricating properties. Squeaking will occur, however, when the manifold pipe surface becomes glazed with graphite from the seal and the rubbing surfaces undergo stick-slip cycles.

Seals for articulated joints have also generally contained reinforcing fibers in the form of thin refractory sheets, wire mesh structures, or finely divided metal fibers. These fibers are mixed with some type of lubricating agent and compressed at about 15-35 tons per square inch in a die to achieve suitable mechanical strength and stability. Seals containing finely divided fibers are known as "powder" seals while seals with sheets or mesh structures are "mesh" seals.

While no seal can completely eliminate squeaking, powder and mesh seals each have certain performance limitations that could stand improvement to reduce the audible levels of squeaking to below that audible inside the passenger compartment of an automobile using the seal. Powder seals can become brittle after extended exposure to the high temperatures encountered in an automobile exhaust system. Such embrittlement results in heat aging that manifests itself as a relatively high rate of squeaking when the engine is operating. Mesh seals can also squeak often and cause accelerated wear on the manifold when metallic fibers become exposed. Nonmetallic fibers may alleviate the friction and wear caused by metallic fibers, but nonmetallic fibers do not exhibit reasonably long service times due to heat damage. Desirable seals would not accelerate wear on the manifold and would exhibit low levels of squeaking that cannot be heard inside the passenger compartment of an automobile. Many have tried to achieve such a seal.

United States Patent No. 4,554,084 describes an articulated seal containing finely divided metal fibers and a sliding agent. The metal fibers are intended to add structural integrity to the structure while the sliding agent acts as a lubricant between the manifold pipe and the seal hypotenuse. The '084 patent discloses the further use of 0.25-10 wt% of an alkali metal chloride, sulfate, carbonate, borate, or phosphate; silicate or phosphate glasses; thiocompounds; organic chlorine, sulfur, phosphorous, or arsenic; boron carbide; potassium borofluoride; or other boron-containing substances for the purpose of coating the metal fibers during engine operation to prevent seizing between the manifold and the fibers.

Whether the fibers become coated or coated evenly, however, depends exclusively on the heat of the engine and the distribution of the coating additive. Normal internal combustion engines can produce exhaust gases at $300°$ - $1600°$ F depending on load and speed with $500°$ - $1200°$ F representing the more usual range. See, Marks, *Standard Handbook for Mechanical Engineers*, pp. 9- 108 to 9-109, 8th Ed. (1978). Accordingly, the formation of any coating and its chemical nature depend completely on the temperatures of the manifold gases. In certain circumstances (e.g., cold weather or operation for short periods of time), the temperatures are insufficient to form a meaningful coating over the fibers to prevent and wear problems and the scope of circumstances under which the seal squeaks.

In U.S. Patent No. 4,601,476, heat curing was used to carbonize a seal containing a resin binder. The carbonized mass acts to increase the bonding between the various metallic and nonmetallic seal components. No efforts are disclosed to form a low friction, wear resistant coating on the metallic fibers during the heating step.

It would be useful to have a seal for articulated connections that would have high structural strength and resist heat aging.

It would also be desireable to have a seal for articulated joints that would maintain a seal for long periods of time without causing excessive wear on the manifold regardless of the temperatures encountered from engine exhaust gases.

Further, it would be desirable to have a seal that exhibited little squeaking over a wide scope of conditions.

## Summary of the Invention

It is an object of the invention to provide a seal for articulated joints that would have high structural strength and resist heat aging.

It is also an object of the invention to provide a seal for articulated joints that would maintain a seal for long periods of time without causing excessive wear on the manifold regardless of the temperatures encountered from engine exhaust gases.

It is a further object of the invention to provide a seal comprising metallic fibers having a low friction, heat resistant coating which are formed by heating the seal in a reducing environment.

In accordance with these and other objects that will become apparent from the description herein, the invention involves a seal comprising a sintered mixture of at least one lubricant, metal fibers, and a powdered metal alloy containing chromium, boron, and carbon, said alloy exhibiting a melting point lower than the metal fibers.

In another aspect of the invention, seals according to the invention are made by a process which comprises:

forming under pressure into a shape suitable as a seal for articulated joints a mixture comprising finely divided metal fibers, at least one lubricant, and a powdered metal alloy comprising chromium, boron, and carbon, said alloy exhibiting a melting point lower than the metal fibers; and

sintering said seal below the melting point of said alloy in a reducing atmosphere.

The present invention provides a seal having low levels of squeaking for extended periods of time, high strength, and high wear resistance. Bonds are formed during the sintering step between the metallic fibers and the relatively low melting alloy which tie the various components of the seal together in a strong structure. The chemical interactions also improve the oxidation resistance of the final seal.

## Detailed Description

Seals according to the invention have three main components: a lubricant, finely divided metal fibers, and a powdered metal alloy. Suitable lubricants include graphite (in flake form is particularly preferred), calcium fluoride, boron nitride, molybdenum disulfide, mica, tungsten carbide, silicon carbide, aluminium nitride, other known sliding lubricants, and mixtures thereof. Flake graphite alone and in combination with calcium fluoride are particularly preferred solid lubricants. Lubricants may be in flake or powder form and present in the seal in quantities of up to about 50 wt% total lubricant based on the total weight of the seal although higher ratios may be used if desired.

The metal fibers can be selected from a number of hard, refractory metals having melting point above about 1900° F. Preferred metal fibers are chopped steel wools of carbon or stainless steels.

The powdered alloy contains, inter alia, chromium, boron, and carbon in one or more combined or uncombined forms with the remainder being a hard metal such as nickel with lower levels of tungsten, iron, and silicon. Preferably, the alloy contains these materials in the approximate weight ratios set forth in Table 1 which are based on the weight of the added alloy component. The alloy is present in the seal in amounts of less than about 30 wt% based on the weight of the total seal.

## Table 1

| Material | Broad (wt%) | Preferred (wt%) | Most Preferred (wt%) |
|---|---|---|---|
| chromium | 10-35 | 12-30 | 13-28 |
| boron | 2-4 | 2.5-3.5 | 2.9-3.2 |
| carbon | 0.25-1.2 | 0.5-1 | 0.6-0.95 |

The alloy powder should be of a sufficiently small size to allow good packing. Preferred sizes are less than 140 mesh (0.105 mm) but preferably larger than about 325 mesh which are designated as "-140 + 350" powders.

3

Particularly preferred alloys within the invention are commercially available under the trademarks Colmonoy 6™, Colmonoy 8™, and Ametek 80™. Colmonoy 6™ contains about 13.5 wt% chromium, about 3 wt% boron, and about 0.65 wt% carbon with the balance being nickel silicon, and iron. The alloy contains chromium boride crystals as available from the manufacturer. Colmonoy 8™ and Ametek 80™ contain about 26 wt% chromium, about 3.1 wt% boron, and about 0.9 wt% carbon with the balance also being nickel silicon, and iron.

The alloy should have a melting point less that of the metal fibers and preferably has a melting point less than about 2100° F, most preferably less than about 2000° F. Colmonoy 6™ has a melting point of about 1900° F while Colmonoy 8™ and Ametek 80™ both have a melting point of about 1975° F.

Upon sintering, the chromium, boron, and carbon in the alloy form various borides and carbides. Borides and carbides are very hard materials with low coefficients of friction. Because they become evenly distributed throughout the seal, the borides and carbides cover the surface of the metallic fibers with a hard, wear resistant protective coating having a low coefficient of friction. Additionally, various borides and carbides form at discrete locations throughout the seal thereby producing a large number of evenly distributed wear resistant sites. The combination of a fiber covering and discrete sites results in a seal that is virtually squeak-free. It also appears that the formed carbides and borides inhibit the formation of a lubricant glaze on the manifold which maintains the substantially squeak-free operation.

The physical methods used to form the present seals are not complicated. Metallic fibers, a lubricant, and the powdered metal alloy are mixed uniformly, placed into a die having an appropriate configuration for an articulated joint seal, compressed, and sintered. Typical compression pressures are on the order of about 15-35 tons/in². Small quantities, e.g. less than about 0.1 wt%, of an organic mixing aid may be used if desired during the mixing step and removed from the seal later prior to or during the sintering step. Glycerol is a useful mixing aid for the present invention.

Suitable beating conditions include a temperature up to the melting point of the alloy powder, e.g. at least about 1600° F, for about 5 to about 45 minutes depending on the temperature chosen (shorter times are required at the higher temperatures). Preferred heating conditions include temperatures of about 1875° to about 2050° F with a temperature of about 1900° to about 1950° F being particularly preferred at times of about 10 to about 20 minutes.

The seal is sintered under a reducing atmosphere to avoid metal oxidation and to promote the formation of metallic bonds. Preferred reducing atmospheres contain high percentages of hydrogen. The most preferred reducing atmospheres are dissociated ammonia of about 75% hydrogen and 25% nitrogen or pure, i.e. 100%, hydrogen.

If desired, one or more reinforcing members may be used around the inside diameter of the seal to increase its structural strength. Exemplary reinforcing members include a ring of knitted mesh wire around the inside diameter such as in U.S. Patent No. 4,601,467 and a metal cylinder that is solid or perforated. A metal cylinder is particularly useful when very high strength is required by the seal. Reinforcing members are preferably placed into the die before compression.

The following examples are presented to illustrate certain embodiments of the invention.

**Examples**

Example 1

A seal according to the invention was prepared by blending together the following materials and forming the composite into an annular seal. In general, the components are mixed by dumping them into an offset cone mixer and mixed for about 30 minutes. Small quantities of glycerol are used to prevent settling or segregation of the low melting alloy powder. Seals are formed in an appropriate mold with pressures of up to about 22 ton/in². Sintering is performed in a reducing atmosphere of dissociated ammonia or 100% hydrogen at about 1900° to about 2050° F for about 10 to about 30 minutes. All proportions are expressed as percent based on total weight of the sintered seal except where noted. Glycerol is not counted in the weight ratios because it is removed during the sintering process.

EP 0 453 068 A2

## Example 1

| Material | Percent |
|---|---|
| Chopped carbon steel wool | 55.0 |
| Flake Graphite | 25.0 |
| COLMONOY™ 8 sprayweld powder (-140/+325) | 20.0 |
| Glycerol | 0.5 |

The resulting seal was sintered in an atmosphere of dissociated ammonia for 15 minutes at 2050° ± 25° F. Later tests have resulted in useful seals after sintering at lower temperatures of about 1950° F.

Example 2

A seal was prepared by mixing the following materials:

## Example 2

| Material | Percent |
|---|---|
| Chopped 434 stainless steel wool | 55.0 |
| SUPERIOR™ Graphite 7001 | 25.0 |
| COLMONOY™ 8 powder | 20.0 |
| Glycerol | 0.5 |

The formed seal was sintered at 1900° F for 20 minutes in an atmosphere of dissociated ammonia.

Example 3

Another seal in accordance with the invention was prepared as in Example 2 except for the use of calcium fluoride as a high temperature lubricant in combination with the graphite.

| Material | Percent |
|---|---|
| Chopped 434 stainless steel wool | 45.0 |
| SUPERIOR™ Graphite 7001 | 25.0 |
| COLMONOY™ 8 powder | 20.0 |
| Calcium fluoride | 10.0 |

The formed seal was sintered at 1900° F for 20 minutes in an atmosphere of dissociated ammonia.

It will be understood that the examples presented above are merely as an aid to understanding the invention. The specific ratios and materials shown are not intended to act as limitations on the scope of the appended claims.

## Claims

1. A sintered seal for articulated pipe connections, said seal comprising a sintered mixture of:
   a lubricant,
   metal fibers, and
   a powdered metal alloy containing chromium, boron, and carbon, said alloy exhibiting a melting point lower than the metal fibers.

2. A seal according to claim 1 wherein said lubricant is selected from the group consisting of graphite, calcium fluoride, boron nitride, molybdenum disulfide, mica, tungsten carbide, silicon carbide, aluminum nitride, and mixtures thereof.

3. A seal according to claim 2 wherein said lubricant comprises graphite.

4. A seal according to claim 2 wherein said lubricant is a mixture of graphite and calcium fluoride.

5. A seal according to claim 1 wherein said metal fibers comprise chopped steel wool.

6. A seal according to claim 5 wherein said steel wool comprises stainless steel.

7. A seal according to claim 5 wherein said steel wool comprises carbon-containing steel.

8. A seal according to claim 1 wherein said alloy comprises about 10 to about 35 wt% chromium, about 2 to about 4 wt% boron, and about 0.25 to about 1.2 wt% carbon.

9. A seal according to claim 8 wherein said alloy comprises about 12 to about 30 wt% chromium, about 2.5 to about 3.5 wt% boron, and about 0.5 to about 1 wt% carbon.

10. A seal according to claim 9 wherein said alloy comprises about 13 to about 28 wt% chromium, about 2.9 to about 3.2 wt% boron, and about 0.6 to about 0.95 wt% carbon.

11. A seal according to claim 10 wherein said alloy comprises about 13.5 wt% chromium, about 3 wt% boron, and about 0.65 wt% carbon.

12. A seal according to claim 10 wherein said alloy comprises about 26 wt% chromium, about 3.1 wt% boron, and about 0.9 wt% carbon.

13. A seal according to claim 1 exhibiting an annular shape and further comprising a wire mesh ring as a reinforcing member around an inside diameter of said seal.

14. A seal according to claim 1 exhibiting an annular shape and further comprising a cylindrical metal sleeve as a reinforcing member around an inside diameter of said seal.

15. A seal for articulated pipe connections, said seal comprising a sintered mixture of a lubricant, metal fibers, and a powdered metal alloy comprising chromium, boron, and carbon, said alloy exhibiting a melting point lower than the metal fibers, wherein said seal is made by a process comprising:
sintering said seal at a temperature below the melting point of said alloy in a reducing atmosphere.

16. A seal for articulated pipe connections, said seal comprising a lubricant, metal fibers, and a chromium-containing powdered metal alloy exhibiting a melting point lower than the metal fibers wherein said seal is made by a process comprising:
heating said seal to a temperature within the range from about 1875° F to about 2050° F in a reducing atmosphere for about 5 to about 45 minutes.

17. A process for making a seal for articulated joints, said process comprising:
forming a mixture into a seal under pressure, said mixture comprising finely divided metal fibers, a lubricant, and a powdered metal alloy comprising chromium, boron, and carbon, said alloy exhibiting a melting point lower than the metal fibers; and
sintering said seal at a temperature below the melting point of said alloy in a reducing atmosphere.

18. A process according to claim 17 wherein the forming step comprises:
forming a mixture under pressure into a shape suitable for use as a seal for an articulated pipe joint, said mixture comprising chopped steel wool, graphite, and a powdered metal alloy which comprises about 10 to about 35 wt% chromium, about 2 to about 4 wt% boron, and about 0.25 to about 1.2 wt% carbon.

19. A process according to claim 17 wherein the forming step comprises:

forming a mixture under pressure into a shape suitable for use as a seal for an articulated pipe joint, said mixture comprising chopped steel wool, graphite, calcium fluoride, and a powdered metal alloy which comprises about 10 to about 35 wt% chromium, about 2 to about 4 wt% boron, and about 0.25 to about 1.2 wt% carbon.

20. A process according to claim 17 wherein the forming step comprises:
   forming said mixture around a ring of knitted mesh wire.

21. A process according to claim 17 wherein the forming step comprises:
   forming said mixture around a metal cylinder.

22. A process according to claim 17 wherein the sintering step comprises:
   heating said seal at a temperature within the range from about 1875° F to about 2050° F for about 5 to about 45 minutes in an atmosphere comprising either hydrogen or dissociated ammonia.

23. A process according to claim 17 wherein the sintering step comprises:
   heating said seal at a temperature within the range from about 1900° F to about 1950° F for about 10 to about 20 minutes in an atmosphere comprising either hydrogen or dissociated ammonia.